# EUROPÄISCHE PATENTANMELDUNG

(11) **EP 0 869 049 A1**
(43) Veröffentlichungstag der Anmeldung: **07.10.1998**
(21) Anmeldenummer: 97104559.6
(22) Anmeldetag: 18.03.1997
(51) Int. Cl.: B62D 21/14, B62D 53/06, B60D 1/155

(54) **Vorrichtung zur Längenveränderung des Achsabstandes eines Fahrzeugs oder der Zugeinrichtung eines Gliederzuges**

(71) Anmelder: BPW Bergische Achsen Kommanditgesellschaft, 51674 Wiehl (DE)
(72) Erfinder: Rossenbach, Bernhard, 51597 Morsbach (DE); Kretschmer, Rainer, 51545 Waldbröl (DE); Rosendahl, Marco, 51674 Wiehl (DE)
(74) Vertreter: Stenger, Watzke & Ring Patentanwälte

(57) **Zusammenfassung**

Die Erfindung betrifft eine Vorrichtung zur Längenveränderung des Achsabstandes eines Fahrzeuges, insbesondere zur Längenveränderung des Fahrgestells eines Anhängers oder Sattelanhängers (A), oder zur Längenveränderung der Zugeinrichtung (LZ) eines aus Zugfahrzeug (Z) und Anhänger (A) bestehenden Gliederzuges, wobei die Vorrichtung mindestens in den Endstellungen durch eine druckmittelbetätigte Einrichtung (E) verriegelbar ist. Um eine Längenveränderung zu ermöglichen, ohne daß eine Hilfsperson oder der Fahrer den Anhänger durch von Hand auszuführenden Maßnahmen, beispielsweise das Unterlegen von Bremskeilen, festsetzen muß, ist mindestens eine Achse des Anhängers (A) mit einer ausschließlich im Stillstand betätigbaren zusätzlichen Zuspanneinrichtung (9) für die Radbremsen versehen, die vorzugsweise durch mindestens einen Zusatzbremszylinder (31) gebildet ist, der auf die vorhandenen Radbremsen unabhängig von den Bremszylindern (32) der Betriebsbremsanlage einwirkt.

## Beschreibung

Die Erfindung betrifft eine Vorrichtung zur Längenveränderung des Achsabstandes eines Fahrzeugs, insbesondere zur Längenveränderung des Fahrgestells eines Anhängers oder Sattelanhängers, oder zur Längenveränderung der Zugeinrichtung eines aus Zugfahrzeug und Anhänger bestehenden Gliederzuges, wobei die Vorrichtung mindestens in den Endstellungen durch eine druckmittelbetätigte Einrichtung verriegelbar ist.

Um unter Berücksichtigung der gesetzlich vorgeschriebenen Gesamtlänge von aus Zugfahrzeug und Anhänger bestehenden Lastzügen eine größtmögliche Länge der Ladefläche zu verwirklichen, sind Gliederzüge bekannt, bei denen der vorzugsweise als Zentralachs- oder Drehschemelanhänger ausgeführte Anhänger mittels einer längenveränderlichen Zugeinrichtung mit dem Zugfahrzeug verbunden ist. Im normalen Fahrbetrieb befindet sich diese Zugeinrichtung in ihrer eingeschobenen Fahrstellung, so daß die maximal zulässige Gesamtlänge eingehalten wird. Wenn jedoch steile Rampen, beispielsweise bei der Verladung auf Fähren, befahren werden müssen oder für den Durchladebetrieb zwischen der Ladefläche des Zugfahrzeuges und des Anhängers eine Ladebrücke angeordnet werden soll, beispielsweise durch Herabschwenken einer am Heck des Zugfahrzeuges angeordneten Ladebordwand, kann die Zugeinrichtung ausgezogen werden. Hierbei ist es erforderlich, die Zugeinrichtung zumindest in ihrer eingeschobenen Fahrstellung und in ihrer ausgezogenen Endstellung zu verriegeln. Selbstverständlich können derartige längenveränderliche Zugeinrichtungen auch in einer oder mehreren Zwischenstellungen verriegelt werden, falls dies im Einzelfall erwünscht sein sollte. Bei den bekannten Konstruktionen kann eine derartige Verriegelung entweder von Hand oder mittels einer druckmittelbetätigten Einrichtung erfolgen.

Insbesondere in den USA sind Sattelzüge bekannt, bei denen der Achsabstand zwischen dem Achsaggregat des Sattelanhängers und der Hinterachse des Zugfahrzeugs veränderlich ist, um den gesetzlichen Vorschriften in den jeweiligen Bundesstaaten zu genügen. Diese Veränderung erfolgt durch ein Verschieben des Achsaggregats des Sattelanhängers relativ zu dessen Fahrgestell, so daß sich auch unterschiedliche Abstände des Abstandes zwischen der letzten Achse des Zugfahrzeugs und der ersten Achse des Achsaggregats des Sattelanhängers ergeben. Auch hier muß das Achsaggregat in der jeweiligen Stellung am Fahrgestell des Sattelanhängers verriegelt werden.

Schließlich sind Anhänger, insbesondere für den Transport langer Ladegüter, wie Langholz oder Fertigbauteilen, bekannt, bei denen das Fahrgestell in ein vorzugsweise mit einem Drehschemel versehenes Vorderteil und ein mit einem Achsaggregat mit mindestens einer Achse versehenes Hinterteil aufgeteilt ist, die relativ zueinander verschiebbar sind. In der Stellung mit dem größten Abstand zwischen der lenkbaren Vorderachse und dem hinteren Achsaggregat dient der Anhänger dem Transport langer Ladegüter; bei unbeladenem Anhänger wird der Abstand auf ein Minimum verringert. Selbstverständlich können Vorderteil und Hinterteil dieses Anhängers auch in Zwischenstellungen gebracht werden, wobei in jeder Gebrauchsstellung eine Verriegelung erfolgt.

Bei den bekannten Vorrichtungen erfolgt die Längenveränderung des Achsabstandes des jeweiligen Fahrzeugs bzw. die Längenveränderung der Zugeinrichtung durch Festlegen mindestens einer der hinteren Achsen des Anhängers, beispielsweise durch Bremskeile, und Vorziehen bzw. Rücksetzen des Zugfahrzeugs, nachdem die Verriegelung gelöst worden ist. Diese Verriegelung wird durch eine druckmittelbetätigte Einrichtung betätigt.

Der Erfindung liegt die **Aufgabe** zugrunde, eine Längenveränderung der voranstehend beschriebenen Art zu ermöglichen, ohne daß eine Hilfsperson oder der Fahrer den Anhänger durch von Hand auszuführende Maßnahmen, beispielsweise das Unterlegen von Bremskeilen, festsetzen muß.

Die **Lösung** dieser Aufgabenstellung durch die Erfindung ist dadurch gekennzeichnet, daß mindestens eine Achse des Anhängers mit einer ausschließlich im Stillstand betätigbaren zusätzlichen Zuspanneinrichtung für die Radbremsen versehen ist.

Durch diese zusätzliche Zuspanneinrichtung wird erreicht, daß ohne Eingriff in die vorhandene Bremsanlage des Anhängers seine Hinterachse bzw. eine seiner Hinterachsen vom Führerhaus des Zugfahrzeuges aus gebremst werden kann, ohne daß hierzu ein Eingriff in die hohen Sicherheitsauflagen unterworfene Betriebsbremse erfolgt.

Gemäß einem weiteren Merkmal der Erfindung kann die Zuspanneinrichtung durch mindestens einen Druckmittelzylinder gebildet werden, der auf die vorhandene Radbremsen unabhängig von deren Betriebsbremsanlage einwirkt. Die Anordnung eines derartigen zusätzlichen Druckmittelzylinders erfordert erheblich geringeren Aufwand als ein Eingriff in die Betriebsbremsanlage.

Da Anhänger üblicherweise über jeweils mittels eines Bremshebels betätigbare Radbremsen verfügen, wird mit der Erfindung weiterhin vorgeschlagen, den Druckmittelzylinder der zusätzlichen Zuspanneinrichtung über eine Bremswaage auf die Bremshebel der Radbremsen einwirken zu lassen. Die Bremswaage ist bei einer Betätigung der Bremsanlage des Anhängers hierbei erfindungsgemäß vom Druckmittelzylinder der zusätzlichen Zuspanneinrichtung entkoppelt.

Weitere Merkmale und Vorteile der Erfindung ergeben sich aus der nachfolgenden Beschreibung der Zeichnungen.

Auf der Zeichnung sind ein Ausführungsbeispiel eines Gliederzuges und einer zugehörigen längenveränderlichen Zugeinrichtung sowie Ausführungsbeispiele eines Sattelzuges mit relativ zum Auflieger verschiebbarem Achsaggregat und eines Lastzuges mit einem zwecks Veränderung des Achsabstandes geteilten Anhängerfahrgestell, ein Ausführungsbeispiel einer Sicherheitsschaltung sowie ein Ausführungsbeispiel einer Fahrzeugachse mit einer zusätzlichen Zuspanneinrichtung dargestellt, und zwar zeigt:
- Fig. 1: eine Seitenansicht eines Gliederzuges mit in der eingeschobenen Fahrstellung befindlicher Zugeinrichtung,
- Fig. 2: eine der Fig. 1 entsprechende Seitenansicht eines Gliederzuges mit in der ausgezogenen Endstellung befindlicher Zugeinrichtung,
- Fig. 3: eine vergrößerte Darstellung der längenveränderlichen Zugeinrichtung des Gliederzuges nach den Fig. 1 und 2 in der verriegelten Fahrstellung,
- Fig. 4: eine der Fig. 3 entsprechende Darstellung bei Beginn der Entriegelung,
- Fig. 5: eine weitere Darstellung der längenveränderlichen Zugeinrichtung nach der vollständigen Entriegelung und zu Beginn der Auszugsbewegung,
- Fig. 6: eine vierte Darstellung der Zugeinrichtung in der ausgezogenen sowie verriegelten Endstellung,
- Fig. 7: eine Seitenansicht eines Sattelzuges mit in der hinteren Endstellung befindlichem Achsaggregat des Sattelaufliegers,
- Fig. 8: eine der Fig. 7 entsprechende Darstellung mit in der vorderen Endstellung befindlichem Achsaggregat des Sattelaufliegers,
- Fig. 9: eine Seitenansicht eines Lastzuges aus Zugfahrzeug und Anhänger, dessen Fahrgestell ein Vorderteil und ein Hinterteil umfaßt, die relativ zueinander verschiebbar sind, und zwar in der verkürzten Stellung,
- Fig. 10: eine der Fig. 9 entsprechende Darstellung, bei der sich der Anhänger in der verlängerten Transportstellung befindet,
- Fig. 11: ein Schaltschema einer Sicherheitsschaltung,
- Fig. 12: eine Stirnansicht einer mit einer zusätzlichen Zuspanneinrichtung für die Radbremse versehenen Fahrzeugachse,
- Fig. 13: eine Draufsicht auf die Fahrzeugachse nach Fig. 12 und
- Fig. 14: einen Querschnitt gemäß der Schnittlinie XIV-XIV in Fig. 12.

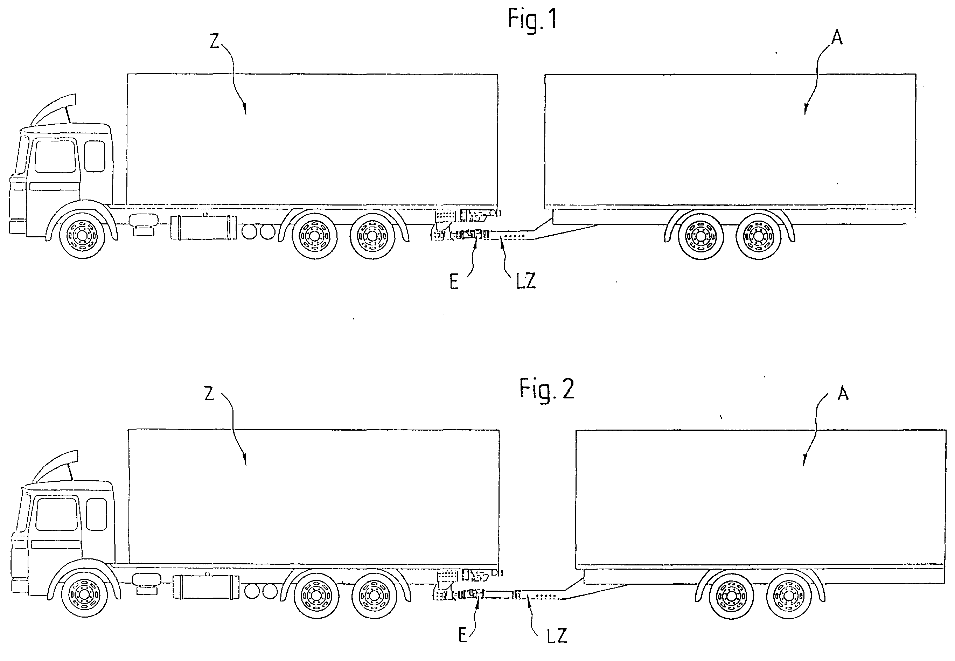

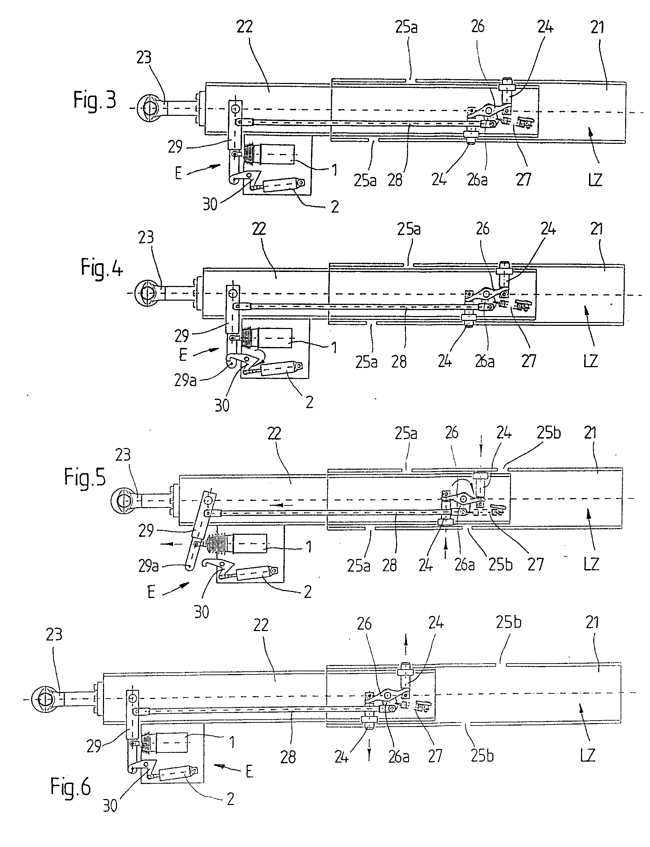

Der in den Fig. 1 und 2 dargestellte Gliederzug besteht aus einem Zugfahrzeug Z und einem beim Ausführungsbeispiel als Zentralachsanhänger ausgebildeten Anhänger A, der mit dem Zugfahrzeug Z über eine längenveränderliche Zugeinrichtung LZ verbunden ist. Diese ist sowohl in der eingeschobenen Fahrstellung gemäß Fig. 1 als auch in der ausgezogenen Endstellung gemäß Fig. 2 durch eine druckmittelbetätigte Einrichtung E arretierbar, die einen Betätigungszylinder 1 sowie einen Sperrzylinder 2 umfaßt. Diese sind in den Fig. 1 und 2 nicht dargestellt, aber in den Ausführungsbeispielen der Fig. 3 bis 6 sowie 11 und 12 zu erkennen.

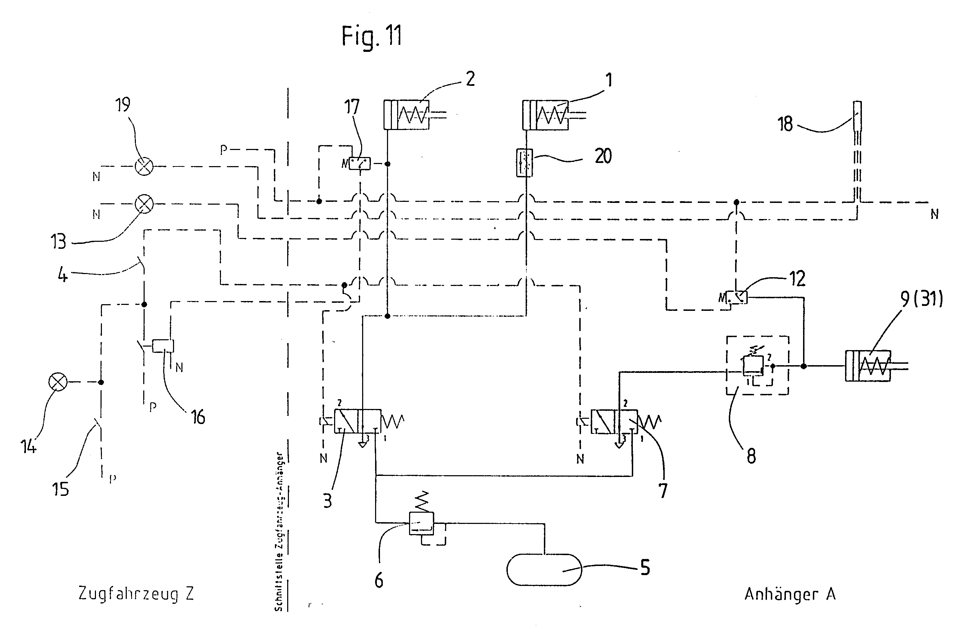

Die in Fig. 11 anhand eines Ausführungsbeispiels in Form eines Schaltbildes dargestellte Sicherheitsschaltung umfaßt außer dem Betätigungszylinder 1 und dem Sperrzylinder 2, die jeweils als ein durch Federkraft in seiner Wirkstellung gehaltener Druckmittelzylinder ausgebildet sind, der durch Druckbeaufschlagung in eine Freigabestellung überführbar ist, ein am Anhänger A angeordnetes Schaltventil 3, das durch einen im Führerhaus des Zugfahrzeuges Z angeordneten Handtaster 4 betätigbar ist und das sowohl den Betätigungszylinder 1 als auch den Sperrzylinder 2 mit dem Druckmittelbehälter 5 des Anhängers A verbindet. Im Normalfall handelt es sich bei diesem Druckmittelbehälter 5 um den zur Bremsanlage des Anhängers A gehörenden Druckluftbehälter. Bei der Sicherheitsschaltung ist zwischen dem Schaltventil 3 und dem Druckmittelbehälter 5 jeweils ein Überströmventil 6 ohne Rückströmung angeordnet.

Parallel zum Schaltventil 3 ist ein zweites Schaltventil 7 angeordnet, das gleichzeitig mit dem ersten Schaltventil 3 vom Handtaster 4 betätigbar ist und das seinerseits unter Zwischenschaltung eines Druckbegrenzungsventils 8 die Bremsanlage des Anhängers A betätigt.

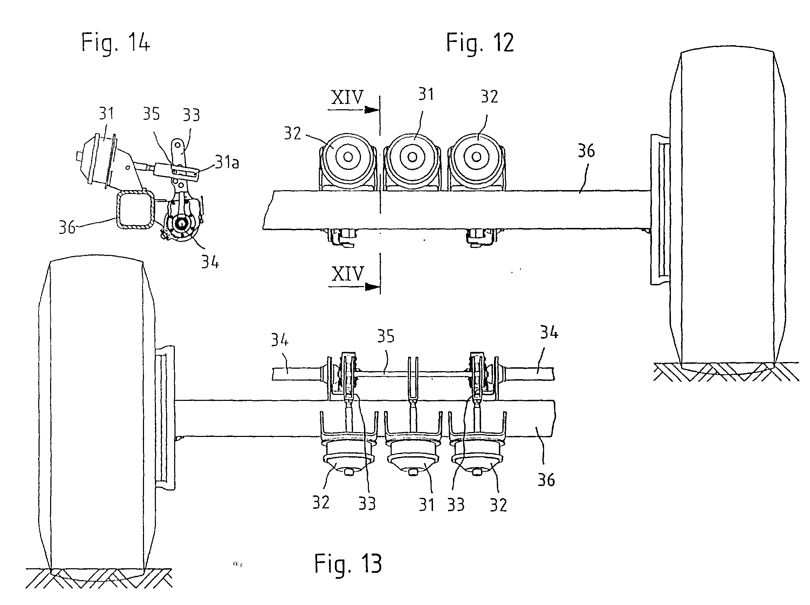

Gemäß Fig. 11 wird die Radbremse des Anhängers A über die Sicherheitsschaltung durch eine zusätzliche Zuspanneinrichtung 9 betätigt, die beim Ausführungsbeispiel nach den Fig. 12 bis 14 durch einen Zusatzbremszylinder 31 gebildet wird, der bei diesem Ausführungsbeispiel wie die vorhandenen Bremszylinder 32 der vorhandenen Betriebsbremsanlage als Membranzylinder ausgebildet ist. Während die Bremszylinder 32 über jeweils einen Bremshebel 33 auf eine zur Radbremse führende Bremsnockenwelle 34 einwirken (siehe Fig. 13), wirkt der Zusatzbremszylinder 31 beim dargestellten Ausführungsbeispiel über eine Bremswaage 35 auf die Bremshebel 33 und damit gleichmäßig auf beide Radbremsen. Diese Bremswaage 35 ist bei einer Betätigung der Betriebsbremsanlage des Anhängers vom Zusatzbremszylinder 31 entkoppelt. Beim Ausführungsbeispiel erfolgt diese Entkopplung auf besonders einfache Weise durch im Gabelkopf des Zusatzbremszylinders 31 ausgebildete Langlöcher 31a.

Wie die Fig. 12 bis 14 erkennen lassen, gibt es für die Anordnung des Zusatzbremszylinders 31 keine Probleme, da dieser problemlos zwischen den Bremszylindern 32 in der Mitte am Achskörper 36 in bekannter Weise angeordnet werden kann.

Wie wiederum aus Fig. 11, dem Schaltbild der Sicherheitsschaltung hervorgeht, wird durch einen an die Druckmittelzufuhrleitung zur zusätzlichen Zuspanneinrichtung 9 angeschlossenen Druckschalter 12 überwacht, wenn die zusätzliche Zuspanneinrichtung 9 betätigt wird. Der Druckschalter 12 ist über eine Signalleitung mit einer Kontrolleuchte 13 im Führerhaus des Zugfahrzeuges Z verbunden, die auf diese Weise dem Fahrer signalisiert, daß der Anhänger A mit Hilfe der Sicherheitsschaltung und der zusätzlichen Zuspanneinrichtung 9 eingebremst ist.

Um sicherzustellen, daß die beim Ausführungsbeispiel als 3/2-Wege-Magnetventile ausgebildeten Schaltventile 3 und 7 ausschließlich bei Stillstand betätigt werden können, ist der Handtaster 4 in der zum Rückfahrscheinwerfer 14 führenden Stromleitung angeordnet, die nur dann mit Strom versorgt wird, wenn der zugehörige Schalter 15 durch Einlegen des Rückwärtsganges im Getriebe des Zugfahrzeuges Z geschlossen worden ist.

Parallel zum Rückfahrscheinwerfer 14 und seinem Schalter 15 ist an das Stromnetz des Zugfahrzeuges Z ein Relais 16 angeschlossen, das durch einen Druckschalter 17 bestromt wird, der sich in der Druckmittelzuleitung zum Sperrzylinder 2 befindet. Die Selbsthaltung des Relais 16 hält die Freigabestellung des Betätigungszylinders 1 und Sperrzylinders 2 und die Betätigung der Bremsanlage des Anhängers A aufrecht, auch wenn der Schalter 15 durch Herausnehmen des Rückwärtsganges wieder geöffnet worden ist, und zwar solange bis der Handtaster 4 losgelassen wird und hierdurch über den Druckschalter 17 das Relais 16 stromlos wird.

Die Sicherheitsschaltung umfaßt weiterhin einen Näherungsschalter 18, der die Betätigung der Verriegelung der längenveränderlichen Zugeinrichtung LZ überwacht und mittels einer im Führerhaus des Zugfahrzeuges Z angeordneten Kontrolleuchte 19 signalisiert. Schließlich zeigt das Schaltbild der Sicherheitsschaltung eine vor dem Betätigungszylinder 1 in der Druckmittelzuleitung angeordnete Drossel 20, die zur Einstellung der jeweils notwendigen Ansprechzeit des Betätigungszylinders 1 und des Verriegelungszylinders 2 verstellbar ist.

Wenn die längenveränderliche Zugeinrichtung LZ des Gliederzuges aus der eingeschobenen Fahrstellung nach Fig. 1 beispielsweise zum Überfahren einer Fährrampe verlängert werden soll, legt der Fahrer den Rückwärtsgang ein. Hierdurch wird der Schalter 15 für den Rückfahrscheinwerfer 14 geschlossen. Durch eine Betätigung des im Führerhaus des Zugfahrzeuges Z angeordneten Handtasters 4 wird nunmehr bei stillstehendem Gliederzug das Schaltventil 3 betätigt. Der Handtaster 4 muß während des gesamten Vorganges der Längenveränderung gedrückt werden. Das Schaltventil 3 gelangt somit aus der in Fig. 11 dargestellten Entlüftungsstellung in seine Wirkstellung, in der es den Druckmittelbehälter 5 des Anhängers A sowohl mit dem Betätigungszylinders 1 als auch mit dem Sperrzylinder 2 der druckmittelbetätigten Einrichtung E verbindet. Durch den im Druckmittelbehälter 5 anstehenden Druck wird der Kolben sowohl des Betätigungszylinders 1 als auch des Sperrzylinders 2 entgegen seiner Federbelastung aus der Wirkstellung in eine Freigabestellung überführt, so daß die Verriegelung der längenveränderlichen Zugeinrichtung LZ in der eingeschobenen Fahrstellung aufgehoben ist.

Durch die Betätigung des Handtasters 4 wird gleichzeitig mit dem Schaltventil 3 das zweite Schaltventil 7 aus der Entlüftungsstellung in die Wirkstellung überführt, so daß auch der Zusatzbremszylinder 31 der Zuspanneinrichtung 9 mit Druckmittel aus dem Druckmittelbehälter 5 beaufschlagt wird. Auf diese Weise wird der Anhänger A gebremst. Dieses Einbremsen des Anhängers A wird über den Druckschalter 12 erfaßt und durch die im Führerhaus des Zugfahrzeuges Z angeordnete Kontrolleuchte 13 signalisiert.

Über den in der Druckleitung zum Sperrzylinder 2 angeordneten Druckschalter 17 wird bei der Druckbeaufschlagung des Sperrzylinders 2 ein Signal abgegeben, das eine Betätigung des Relais 16 zur Folge hat, das parallel zum Schalter 15 des Rückfahrscheinwerfers 14 an die Stromquelle des Zugfahrzeuges angeschlossen ist. Da das Relais 16 für eine vorgebbare Schaltzeit durch Selbsthaltung die Stromversorgung des Handtasters 4 aufrechterhält, kann nunmehr der Rückwärtsgang herausgenommen und das Zugfahrzeug Z durch Einlegen eines Vorwärtsganges geringfügig nach vorn gefahren werden. Da der Anhänger A durch Betätigen des Handtasters 4 in Verbindung mit dem Relais 16 eingebremst bleibt, bewirkt das Vorfahren des Zugfahrzeuges Z ein Ausziehen der längenveränderlichen Zugeinrichtung LZ aus der eingeschobenen Fahrstellung in die ausgezogene Endstellung, die in Fig. 2 dargestellt ist, oder in Zwischenstellungen.

Nach Loslassen des Handtasters 4 fällt das Relais 16 ab, so daß die Stromzufuhr zu den Schaltventilen 3 und 7 unterbrochen wird. Die Schaltventile 3 und 7 kehren durch Federbelastung in ihre in Fig. 11 dargestellte Entlüftungsstellung zurück. Hierdurch erfolgt eine Druckentlastung sowohl des Betätigungszylinders 1 und des Sperrzylinders 2 als auch des Zusatzbremszylinders 31. Hierdurch wird sowohl die Zusatzbremseinrichtung des Anhängers A gelöst als auch die druckmittelbetätigte Einrichtung E durch Rückkehr sowohl des Betätigungszylinders 1 als auch des Sperrzylinders 2 in die Wirkstellung zurückgeführt, in der die längenveränderliche Zugeinrichtung LZ in den verriegelten Zustand überführt wird. Durch den Näherungsschalter 18 wird hierbei überwacht, ob diese Verriegelungsstellung der längenveränderlichen Zugeinrichtung LZ tatsächlich erreicht ist. Die Verriegelung wird durch Erlöschen der Kontrolleuchte 19 im Führerhaus des Zugfahrzeuges Z angezeigt. Der Gliederzug kann nunmehr mit ausgezogener Endstellung der längenveränderlichen Zugeinrichtung LZ gemäß Fig. 2 zum Befahren beispielsweise einer Fährrampe in Bewegung gesetzt werden.

Aus den voranstehenden Darlegungen geht hervor, daß durch die Sicherheitsschaltung sichergestellt wird, daß die druckmittelbetätigte Einrichtung E der längenveränderlichen Zugeinrichtung LZ ausschließlich im Stillstand des Gliederzuges betätigbar ist, wobei nicht nur ein Entriegeln und Verriegeln, sondern auch das Einbremsen des Anhängers erfolgt, ohne daß der Fahrer des Zugfahrzeuges Z sein Führerhaus verlassen muß.

Die Fig. 3 bis 6 zeigen ein Ausführungsbeispiel einer längenveränderlichen Zugeinrichtung LZ mit zugehöriger druckmittelbetätigter Einrichtung E zur Verriegelung in den beiden Endstellungen. Die längenveränderliche Zugeinrichtung LZ besteht bei diesem Ausführungsbeispiel aus einem am Fahrgestell des Anhängers A befestigten Außenrohr 21, in dem ein Innenrohr 22 längsverschiebbar geführt ist, das an seinem vorderen Ende eine Zugöse 23 trägt. Im Innenrohr 22 sind zwei gegenläufig betätigbare Riegelbolzen 24 angeordnet, die in Riegelöffnungen 25a bzw. 25b des Außenrohres 21 eingreifen, um die längenveränderliche Zugeinrichtung LZ entweder in der eingeschobenen Fahrstellung gemäß Fig. 3 oder in der ausgezogenen Endstellung gemäß Fig. 6 zu verriegeln.

Die Betätigung der Riegelbolzen 24 geschieht mittels einer Wippe 26 entgegen der Kraft einer Rückzugfeder 27 durch eine Betätigungsstange 28, deren hinteres Ende über einen starr mit der Wippe 26 verbundenen Zwischenhebel 26a mit der Wippe 26 und deren vorderes Ende über einen Schwenkhebel 29 mit dem Betätigungszylinder 1 verbunden ist. Das freie Ende des Schwenkhebels 29 trägt einen Riegelstift 29a, der mit einem Sperriegel 30 zusammenwirkt, der seinerseits durch den Sperrzylinder 2 betätigt wird.

Wie die Fig. 3 bis 6 erkennen lassen, hat der Sperrzylinder 2 ein kleineres Arbeitsvolumen als der Betätigungzylinder 1, so daß der Kolben des Sperrzylinders 2 vor dem Kolben des Betätigungszylinders 1 verschoben wird, obwohl die beiden Zylinder 1 und 2 gemäß den Schaltbildern in den Fig. 11 und 12 zueinander parallel geschaltet sind.

Hierdurch ergibt sich gemäß der Darstellung in den Fig. 3 bis 6, daß bei einer gleichzeitigen Druckbeaufschlagung des Betätigungszylinders 1 und Sperrzylinders 2 zuerst der Sperriegel 30 aus seiner in Fig. 3 gezeichneten Riegelstellung im Uhrzeigersinn in die in Fig. 4 dargestellte Freigabestellung verschwenkt wird, in der er den Riegelstift 29a freigibt. Durch die anschließene Bewegung der Kolbenstange des Betätigungszylinders 1 kann somit der entriegelte Schwenkhebel 29 gemäß Fig. 5 ebenfalls im Uhrzeigersinn verschwenkt werden.

Hierdurch wird gemäß Fig. 5 die Betätigungsstange 28 nach vorn gezogen, wodurch sich die Wippe 26 im Uhrzeigersinn dreht und hierbei die Riegelbolzen 24 aus den Riegelöffnungen 25b des Außenrohres 21 herausbewegt. Das Innenrohr 22 kann somit gemäß Fig. 5 nach vorn aus dem Außenrohr 21 herausgezogen werden bis die längenveränderliche Zugeinrichtung LZ ihre ausgezogene Endstellung gemäß Fig. 6 einnimmt. Wenn in dieser Endstellung der Betätigungszylinder 1 und der Sperrzylinder 2 drucklos wird, zieht die Rückzugfeder 27 die Betätigungsstange 28 wieder in ihre in Fig. 3 erkennbare Ausgangsstellung zurück. Über die Wippe 26 werden hierbei die Riegelbolzen 24 nunmehr in die Riegelöffnungen 25a des Außenrohres 21 verschoben. Gleichzeitig kehrt der Schwenkhebel 29 in seine Ausgangsstellung zurück, in der er über seinen Riegelstift 29a durch den Sperriegel 30 verriegelt wird.

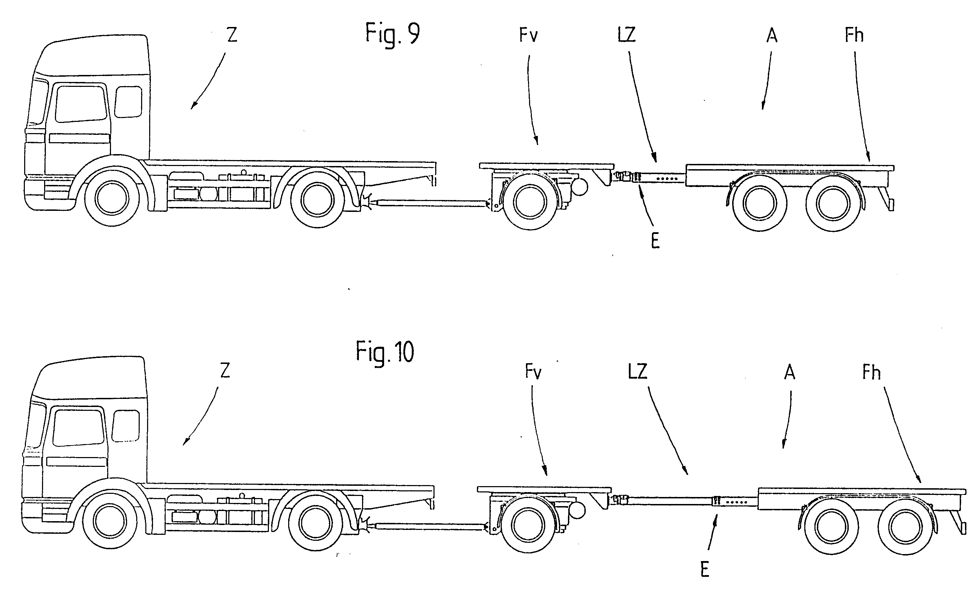

Eine der längenveränderlichen Zugeinrichtung LZ entsprechende Einrichtung besitzt auch der Anhänger A gemäß den Fig. 9 und 10. Diese verbindet das Fahrgestellvorderteil Fv, das beim Ausführungsbeispiel nach den Fig. 9 und 10 mit einem Drehschemel versehen ist, mit dem Fahrgestellhinterteil Fh, das beim Ausführungsbeispiel ein Achsaggregat mit zwei Achsen trägt.

Die voranstehend bezüglich der längenveränderlichen Zugeinrichtung LZ des Gliederzuges nach den Fig. 1 und 2 gemachten Darlegungen treffen somit in vollem Umfang auf den Anhänger A der Fig. 9 und 10 zu, dessen Fahrgestellvorderteil Fv und Fahrgestellhinterteil Fh relativ zueinander verschiebbar sind, wobei in der jeweiligen Endstellung sowie in möglichen Zwischenstellungen jeweils eine Verriegelung mit Hilfe der druckmittelbetätigen Einrichtung E erfolgt, wie sie voranstehend erläutert worden ist. Hierdurch ist es möglich, den Anhänger A für den Transport langer Güter in eine Situation zu bringen, die in Fig. 10 dargestellt ist. Bei Leerfahrten wird dagegen der Abstand zwischen dem Fahrgestellvorderteil Fv und dem Fahrgestellhinterteil Fh verkürzt, wie dies in Fig. 9 gezeichnet ist.

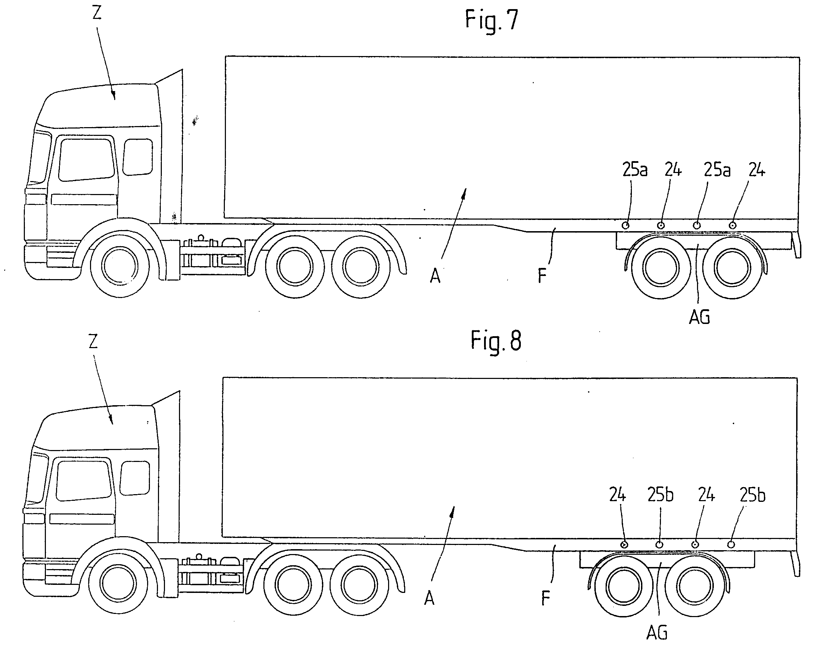

Die Fig. 7 und 8 zeigen schließlich einen Sattelzug aus einem Zugfahrzeug Z und einem Sattelanhänger A, der beim dargestellten Ausführungsbeispiel mit einem Achsaggregat AG versehen ist, das relativ zum Fahrgestell F des Sattelanhängers A verschiebbar ist.

Die Fig. 7 zeigt das Achsaggregat AG in der hinteren Endstellung, wogegen die Fig. 8 die vordere Endstellung des Achsaggregats AG zeigt. Die Relativbewegung des Achsaggregats AG zum Fahrgestell F erfolgt in der Art der Längenveränderung der Zugeinrichtung LZ, wobei beide Endstellungen wiederum mittels einer druckmittelbetätigten Einrichtung E verriegelt werden. Die im Fahrgestell F ausgebildeten vorderen und hinteren Riegelöffnungen 25a und 25b sind in den Fig. 7 und 8 angedeutet. Auch die zugehörigen Riegelbolzen 24 sind zu erkennen.

Auch bei den Ausführungsbeispielen nach den Fig. 7 und 8 sowie 9 und 10 wird durch die in Fig. 11 dargestellte Sicherheitsschaltung sichergestellt, daß die Veränderung des Abstandes zwischen den hinteren Achsen des Achsaggregates AG bzw. des Fahrgestellhinterteils Fh und der hinteren Achse des Zugfahrzeuges Z bzw. der lenkbaren Achse des Fahrgestellvorderteils Fv ausschließlich im Stillstand der Fahrzeuge vorgenommen werden kann, wobei sowohl ein Entriegeln und Verriegeln der jeweiligen Endstellungen und das Einbremsen des Anhängers A erfolgt, ohne daß der Fahrer des Zugfahrzeuges Z sein Führerhaus verlassen muß.

### Bezugszeichenliste

- A: Anhänger
- AG: Achsaggregat
- E: druckmittelbetätigte Einrichtung
- F: Fahrgestell
- Fv: Fahrgestellvorderteil
- Fh: Fahrgestellhinterteil
- LZ: längenveränderliche Zugeinrichtung
- Z: Zugfahrzeug
- 1: Betätigungszylinder
- 2: Sperrzylinder
- 3: Schaltventil
- 4: Handtaster
- 5: Druckmittelbehälter
- 6: Überströmventil
- 7: Schaltventil
- 8: Druckbegrenzungsventil
- 9: Zuspanneinrichtung
- 12: Druckschalter
- 13: Kontrolleuchte
- 14: Rückfahrscheinwerfer
- 15: Schalter
- 16: Relais
- 17: Druckschalter
- 18: Näherungsschalter
- 19: Kontrolleuchte
- 20: Drossel
- 21: Außenrohr
- 22: Innenrohr
- 23: Zugöse
- 24: Riegelbolzen
- 25a: Riegelöffnung
- 25b: Riegelöffnung
- 26: Wippe
- 26a: Zwischenhebel
- 27: Rückzugfeder
- 28: Betätigungsstange
- 29: Schwenkhebel
- 29a: Riegelstift
- 30: Sperriegel
- 31: Zusatzbremszylinder
- 31a: Langloch
- 32: Bremszylinder
- 33: Bremshebel
- 34: Bremsnockenwelle
- 35: Bremswaage
- 36: Achskörper

## Patentansprüche

1. Vorrichtung zur Längenveränderung des Achsabstandes eines Fahrzeugs, insbesondere zur Längenveränderung des Fahrgestells eines Anhängers oder Sattelanhängers, oder zur Längenveränderung der Zugeinrichtung eines aus Zugfahrzeug und Anhänger bestehenden Gliederzuges, wobei die Vorrichtung mindestens in den Endstellungen durch eine druckmittelbetätigte Einrichtung verriegelbar ist,
**dadurch gekennzeichnet,**
daß mindestens eine Achse des Anhängers (A) mit einer ausschließlich im Stillstand betätigbaren zusätzlichen Zuspanneinrichtung (9) für die Radbremsen versehen ist.

2. Vorrichtung nach Anspruch 1, dadurch gekennzeichnet, daß die Zuspanneinrichtung (9) durch mindestens einen Druckmittelzylinder (31) gebildet ist, der auf die vorhandenen Radbremsen unabhängig von deren Betriebsbremsanlage einwirkt.

3. Vorrichtung nach Anspruch 1 und 2 mit jeweils über einen Bremshebel (33) betätigten Radbremsen, dadurch gekennzeichnet, daß der Druckmittelzylinder (31) der zusätzlichen Zuspanneinrichtung (9) über eine Bremswaage (35) auf die Bremshebel (33) der Radbremsen wirkt.

4. Vorrichtung nach Anspruch 3, dadurch gekennzeichnet, daß die Bremswaage (35) bei einer Betätigung der Betriebsbremsanlage des Anhängers (A) vom Druckmittelzylinder (31) der zusätzlichen Zuspanneinrichtung (9) entkoppelt ist.
